# NEUE EUROPÄISCHE PATENTSCHRIFT

(11) **EP 0 658 172 B2**
(45) Veröffentlichungstag und Bekanntmachung des Hinweises auf die Entscheidung über den Einspruch: **18.12.2002**
(45) Hinweis auf die Patenterteilung: 02.01.1997
(21) Anmeldenummer: 93919081.5
(22) Anmeldetag: 18.08.1993
(51) Int. Cl.: C08F 220/04, C14C 3/28, C14C 3/22

(54) **ALKOXYGRUPPENHALTIGE COPOLYMERISATE UND IHRE VERWENDUNG ZUM NACHGERBEN VON LEDER**
ALKOXY GROUP-CONTAINING COPOLYMERS AND THEIR USE FOR RETANNING LEATHER
COPOLYMERES CONTENANT DES GROUPES ALCOXY ET LEUR UTILISATION OUR RETANNER DU CUIR

(30) Priorität: 26.08.1992 DE 4227974
(43) Veröffentlichungstag der Anmeldung: 21.06.1995
(73) Patentinhaber: Stockhausen GmbH & Co. KG, 47805 Krefeld (DE)
(72) Erfinder: DAHMEN, Kurt, D-41239 Mönchengladbach (DE); MERTENS, Richard, D-47803 Krefeld (DE); BREHM, Helmut, D-47800 Krefeld (DE); KILIAN, Horst, D-47807 Krefeld (DE); HOUBEN, Jochen, D-47918 Tönisvorst (DE); MÜLLER, Thomas, D-40476 Düsseldorf (DE)
(74) Vertreter: Dannappel, Hans-Jochen, Dr.
(86) Internationale Anmeldenummer: EP9302197
(87) Internationale Veröffentlichungsnummer: WO94004580

(56) Entgegenhaltungen:
- EP-A- 0 013 836
- EP-A- 0 372 746
- EP-A- 0 537 870
- DE-A- 3 305 637

## Beschreibung

Gegenstand der Erfindung ist ein Verfahren zum Nachgerben mineralisch oder kombiniert gegerbter Leder. Mit dem erfindungsgemässen Verfahren erhältliche Leder zeichnen sich besonders durch verbesserte Fülle und gute Narbenfestigkeit aus.

Die Verwendung von säuregruppenhaitigen Polymeren in der Lederherstellung entspricht dem Stand der Technik. So wird beispielsweise in der EP 29 906 B1 die Verwendung von wasserlöslichen, carboxylgruppenhaltigen Polymeren zur Verringerung der Reibung bei Naßprozessen der Lederherstellung empfohlen. Der Hauptvorteil dieser Zusätze in der Nachgerbung besteht in einer höheren Beladbarkeit der Gerbfässer, ohne daß die Leder verknoten.

Aus der EP 61 420 B1 ist ein Verfahren zur Nachgerbung von Leder bekannt, welches Oligomere auf Acrylbasis hergestellt in Gegenwart von Sulfiten oder Hydrogensulfiten verwendet.

Die EP 84 134 B1 beansprucht ein Verfahren zur Nachgerbung unter Einsatz von acrylischen Polymeren mit Säureund Aminogruppen, wobei das Verhältnis dieser Gruppen zueinander 20 : 1 bis 20 : 17 betragen soll. Der Vorteil der so behandelten Leder zeigt sich in einer tieferen Färbung, verglichen mit unbehandelten Ledern.

Weiterhin wird in der DE-OS 3 248 485 A1 ein Verfahren zur Nachgerbung beschrieben, welches Polymergerbstoffe verwendet, bestehend aus mindestens 10% von mit Aminen oder Aminoalkoholen neutralisierten (Meth)acryleinheiten und 0 bis 90 % Acrylamidbausteinen. Die Leder zeichnen sich durch bessere Narbenfestigkeit und Farbtiefe sowie weicherem Griff aus. Ungünstig wirkt sich bei diesem Verfahren die aufwendige und kostenintensive Darstellung der Polymerisate durch Aminolyse von acrylischen Polymeren aus.

In jüngererer Zeit sind weitere spezielle Copolymere für die Nachgerbung beschrieben worden, so zum Beispiel die Verwendung von Monomeren mit Phophonsäure- und Sulfonsäureestern (EP 113 438 B1); Copolymerisaten mit mindestens 3 Mol % Sulfonsäuregruppenhaltiger Monomere (DE 3 413 301 C2); Terpolymerisaten, bestehend aus 30 bis 75% Maleinsäure(anhydrid), 5 bis 60% (Meth)acrylsäure und 5 bis 40 % (Meth)acrylnitril (EP 216 089 B1) und schließlich die Verwendung von Copolymerisaten, bestehend aus a) 90 bis 20 Mol% (Meth)acrylsäure und b) 10 bis 80 % eines Aminoalkyl(meth)acrylamids, wobei der Aminstickstoff neutralisiert bzw. quatemiert vorliegen kann (EP 278 267 B1).

Obwohl in allen Fällen eine Verbesserung der Eigenschaften der behandelten Leder erzielt wird, findet man keine quantifizierten Hinweise auf füllende Eigenschaften der Polymere. Ebenso ist in keinem der oben angeführten Patente die Verwendung von Polymeren mit Alkoxysequenzen beschrieben.

Die EP 372 746 A2 schließlich beschreibt die Behandlung von Ledern mit amphiphilen Copolymeren, bestehend aus einem überwiegenden Anteil hydrophober Monomerer und einem geringeren Anteil hydrophiler Monomerer zur simultanen Nachgerbung und Fettung von Leder. Obwohl im Text auch die Verwendung von ethoxylierten Monomeren als hydrophobe Einheiten vorgeschlagen wird, ist eine nennenswerte Füllesteigerung durch diese Polymere nicht gegeben.

In der EP-A-0 013 836 wird in Beispiel 19 ein spezielles Terpolymer mit der Zusammensetzung alkoxyliertes Monomer 14/Methylmethacrylat/Methacrylsäure im Gewichtsverhältnis 37/21,4/41,6 beschrieben, wobei das Monomer Nr. 14 Oktaphenyl(40EO)methacrylat ist und das Methylmethacrylat als wasserlösliches Monomer anzusehen ist. Dieses Polymer wird wie die anderen Polymerisaten der EP-A-0 013 836 als Verdicker von wäßrigen Systemen wir Farben, Kosmetika, Nahrungsmittelzubereitungen, ionischen Detergentien, Farbstoffpasten für Textilien, Pharmazeutika und Ölbohrschlämme eingesetzt.

Aufgabe der Erfindung ist es somit, ein Verfahren zum Nachgerben bereitzustellen, welches eine Verbesserung auch qualitativ minderwertiger Leder im Hinblick auf Fülle und Narbenfestigkeit erzielt.

Diese Aufgabe konnte überraschenderweise gelöst werden durch ein Verfahren zum Nachgerben mineralisch oder kombiniert gegerbter Leder, dadurch gekennzeichnet, dass die Leder mit 0,02 bis 10 Gew.-%, vorzugsweise 0,1 bis 7,5 Gew.-%, besonders bevorzugt 0,4 bis 5 Gew.-%, bezogen auf das Falzgewicht des Leders, der Polymerisate hergestellt durch Polymerisation von
a) 1-99 Gew.-%, vorzugsweise 30 bis 95 Gew.-%, wasserlöslichen, ethylenisch ungesättigten, säuregruppenenthaltenden Monomeren und/oder ungesättigten Dicarbonsäureanhydriden,
b) 1 bis 50 Gew.-%, vorzugsweise 5 bis 35 Gew.-%, eines ethylenisch ungesättigten, ein- oder mehrfach alkoxylierten Monomeren der allgemeinen Formel (1) 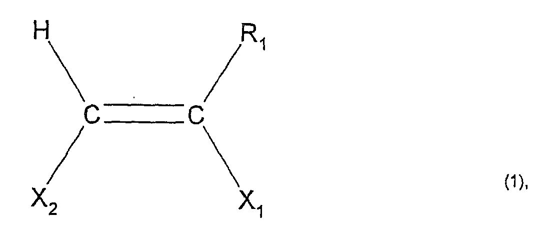 mit
   R₁ gleich H oder Methyl,
   X₁ gleich COOR₂, CH₂OR₂, CH₂N(R₂)₂, OR₂,
   X₂ gleich H, COOH, CONHR₃, CH₂OR₂ und
   R₂ gleich [-CHR₄-CHR₅-O-]ₙ-CHR₄-CHR₅-Y-R₆,
   R₃ gleich H oder C₁-C₄-Alkyl,
   R₄, R₅ gleich H oder Methyl,
   n gleich 1 bis 50,
   Y gleich O, NR₇, S,
   R₆ gleich H, C₁-C₂₄-Alkyl, C₆-C₁₂-Aryl, C₇-C₂₄-Alkylaryl, ungesättigter Mono- oder Dicarbonsäurerest,
   R₇ gleich C₁-C₄-Alkyl, sowie
c) 0 bis 60 Gew.-%, vorzugsweise 0 bis 40 Gew.-% weiteren mit a) und b) copolymerisierbaren wasserlöslichen Monomeren,
mit der Massgabe, dass sich die Gewichtsprozente von a), b) und c) zu 100% ergänzen, ausgenommen Terpolymere aus 41,6 Gew.-% Methacrylsäure, 37 Gew.-% des Esters von Methacrylsäure mit dem Octylphenyloxypoly(ethylenoxy)ethanol mit 40 Ethylenoxideinheiten, und 21,4 Methylmethacrylat,
in wässriger Phase bei einer Flottenlänge von 50 bis 1000 Gew.-% , bevorzugt 100 bis 500 Gew.-%, einem pH-Wert der Flotte von 3,5 bis 6 und Temperaturen von 20 bis 60 °C über einen Zeitraum von 5 bis 180, vorzugsweise 20 bis 60 Minuten behandelt.

Die bervorzugte Säuregruppe der Monomeren a) ist die Carboxylgruppe. Eine weitere Säuregruppe kann die Sulfongruppe sein.

Das gebildete säuregruppenhaltige Polymer wird in teilweise oder vollständig neutralisierter Form als wäßrige Lösung oder Emulsion eingesetzt.

Mit den Copolymerisaten werden überraschend verbesserte Eigenschaften dsr Leder im Hinblick auf Fülle, Weichheit und Narbenfestigkeit gegenüber der Verwendung herkömmlicher, dem oben dargestellten Stand der Technik entsprechenden Polymeren Nachgerbstoffen erzielt. Die Copolymerisate werden nach üblichen Verfahren hergestellt durch radikalische Substanz-, Lösungs- oder Emulsionspolymerisation der Monomere aus den Gruppen a), b) und c) bei Temperaturen von 20 bis 200°C. Bevorzugt werden wasserlösliche Radikalbildner bei Temperaturen von 20 bis 100 °C eingesetzt.

Geeignete Monomere der Gruppe a) sind polymerisierbare, wasserlösliche, säure -, insbesondere carboxyl gruppenhaltige Monomere wie beispielsweise ethylenisch ungesättigte Monocarbonsäuren, deren Anhydride und deren Salze; Sulfonsäuren sowie ungesättigte Dicarbonsäuren, deren Anhydride sowie deren Halbester bzw. Halbamide.

Als Beispiele dieser Gruppe seien genannt die (Meth)acrylsäure, (Meth)allylsulfonsäure, 2-Acrylamido-2-methylpropansulfonsäure, Vinylsultonsäure, Styrolsulronsäure, Maleinsäure, Maleinsäureanhydrid, Fumarsäure, Fumarsäureanhydrid, Itaconsäure sowie Halbester und Halbamide der Maleinsäure, Fumarsäure und der Itaconsäure, wobei die letztgenannten Monomere durch Reaktion der entsprechenden Anhydride mit Alkoholen, Aminen oder Aminoalkoholen zugänglich sind.

Bevorzugt werden von diesen Monomeren die Acrylsäure, die Methacrylsäure sowie Maleinsäure bzw. Maleinsäureanhydrid.

Zu den Monomeren der Gruppe b) gelangt man entweder durch Alkoxylierung von ethylenisch ungesättigten, mindestens eine Hydroxy- oder Aminogruppe tragenden Verbindungen und Umsetzung mit gesättigten Säurederivaten oder aber durch die Umsetzung der Alkoxyaddukte von gasättigten aliphatischen, cycloaliphatischen, aromatischen Alkoholen, Aminen oder Thiolen mit ethylenisch ungesättigten Carbonsäuren, reaktiven Carbonsäurederivaten oder Allylhalogeniden.

Eine weitere Methode zur Herstellung der Monomeren der Gruppe b) besteht in der Addition der genannten Alkoxyaddukte an Acetylen zu den entsprechenden Vinylethem.

Als Beispiele der ersten Monomerklasse seien genannt: Ethylen- und/oder Propylenoxidaddukte von (Meth)-Allylalkohol, 1,4-Butendiol, (Meth)allylamin, wie auch Hydroxyethyl(meth)acrylat, gegebenenfalls weiter urngesetzt mit reaktiven gesättigten Säurederivaten.

Als Beispiele der zweiten Klasse seien genannt die Reaktionsprodukte von vorzugsweise einseitig endverschlossenem Ethylenglykol, Isopropylglykol, Butylglykol, Butyldiglykol sowie Nonylphenol, Isotridecanol mit Ethylen- oder Propylenoxid und Weiterreaktion der Alkylenoxidaddukte mit (Meth)acrylsäure, Allylcnlorid oder anderen reaktiven, ungesättigten Säurederivaten wie zum Beispiel den Säureanhydriden, den Säurehalogeniden oder den Säureestern.

Unter diesen Addukten werden zur Darstellung der Polymere bevorzugt Allylalkohole mit 5 bis 30 EO-Einheiten und Nonylphenolpolyglykol(meth)acrylate mit 5 bis 30 EO-Einheiten verwendet.

Die anzuwendenden Techniken zur Herstellung dieser Monomere sind dem Fachmann bekannt (Vergleicne z.B. Ullmanns Encyklopädie der Technischen Chemie, 4.Auflage 1980, Band 7, Seite 45; Band 19, Seite 31-38; Band 22, Seite 489ff.).

Als Monomere der Gruppe c) sind alle wasserlöslichen, mit a) und b) copolymerisierbaren Monomere einsetzbar, wie beispielsweise ethylenisch ungesättigte Amide, Nitrile und/oder Ester. Als Vertreter dieser Klasse seien genannt (Meth)acrylamid, Dimethylaminopropyl (meth)acrylamid, (Meth)acrylnitril, (Meth) -acrylsäuremethylester, Hydroxyethyl (meth)acrylat, Vinylacetat und N-Vinylpyrrolidon.

Die Herstellung der Polymere kann durch Polymerisation in Substanz oder aber in Gegenwart eines Lösungsmittels durchgeführt werden. Hierfür sind solche Lösungsmittel als geeignet zu betrachten, die beide Monomerklassen gut solvatisieren, insbesondere sind dies Wasser und C₁ bis C₈ Alkohole bzw. Alkoxyalkohole.

Der Start der Reaktion kann durch Redox-Katalyse, thermische oder photochemische Initiierung mit Hilfe von bekannten Initiatorsystemen erfolgen, wobei insbesondere in der Monomermischung lösliche Peroxo- und/oder Azoverbindungen geeignet sind.

Das Zahlenmittel der Molmasse der erhaltenen Polymerisate liegt zwischen 500 und 50.000 g/mol, wobei die Steuerung der Molmasse über die Menge an Initiator, die Monomerkonzentration oder über die Wahl der Polymerisationstemperatur bzw. durch den Einsatz von an sich bekannten Reglem, wie zum Beispiel Mercaptanen, erfolgen kann.

Zur Erlangung von feinteiligen, stabilen Emulsionen, insbesondere bei der Verwendung von Monomeren der Gruppe b) mit mehr als 10 addierten Alkylenoxid-Einheiten, kann es sinnvoll sein, eine Menge von 0,5 bis 5 Gew.% bezogen auf die Monomerenmischung eines anionischen oder nichtionischen Tensids der Reaktionsmischung zuzusetzen oder aber nach der Polymerisation zuzufügen.

Nach beendeter Reaktion werden die Polymerisate durch Zugabe von Basen und gegebenenfalls Wasser teilneutralisiert und in den Zustand einer wäßrigen Lösung bzw. Emulsionen gebracht. Die Basenmenge wird so gewählt, daß sich der pH-Wert der erhaltenen Lösung bzw. Emulsionen zwischen 5 und 9 einstellt. Als Neutralisationsmittel geeignet sind Alkalimetallhydroxide, Erdalkalimetallhydroxide, Ammoniak, Amine, Polyamine oder Aminoalkohole.

Die wäßrigen Lösungen bzw. Emulsionen weisen einen Gehalt an aktiver Substanz (wS) von 10 bis 70 Gew.%, vorzugsweise 20 bis 60 Gew.%, auf.

Die Behandlung der gegerbten Häute mit den Copolymerisaten erfolgt in wäßriger Flotte, erhältlich durch Verdünnen bzw. Emulgieren der beschriebenen Produkte mit Wasser. Die Einsatzmenge des Copolymerisatfeststoffes kann hierbei 0,02 bis 10 Gew.%, bezogen auf das Falzgewicht des Leders, betragen. Bevorzugt werden Mengen von 0,1 bis 7,5 Gew.% verwendet, wobei für die meisten Zwecke 0,4 bis 5 Gew.% zur Erzielung guter Ledereiqenschaften ausreichend sind. Die Flottenlänge beträgt 50 bis 1000 Gew.%, bevorzugt 100 bis 500 Gew.% Die Behandlung erfolgt bei einem pH-Wert der Flotte von 3,5 bis 6 und bei einer Temperatur von 20 bis 60 Grad Celsius über einen Zeitraum von 5 bis 180 Minuten, vorzugsweise 20 bis 60 Minuten. Sie kann beispielsweise durch Walken in einem Faß erfolgen. Die Behandlung kann mit den Produkten allein oder zusammen mit bekannten Fettungs und/oder Färbemitteln erfolgen.

Anhand folgender Ausführungsbeispiele sei die Erfindung näher erläutert.

### Herstellung der Copolymerisate

### Beispiel 1:

in einem Dreihalskolben mit Flügelrührer und Rückflußkühler werden 510,6 g deionisiertes Wasser, 0,21 g Natriumdisulfit und 7,5 g eines Fettalkoholethersulfats vorgelegt und auf 80 °C aufgeheizt. Bei Erreichen der Temperatur werden aus verschiedenen Zuläufen gleichzeitig eine Mischung aus 69,8 g Methacrylsäure, 6 g Nonylphenoxy(14 EO) methacrylat und 15 g des Fettalkoholethersulfates sowie eine Lösung von 0,21 g Ammoniumperoxodisulfat in 75 g Wasser innerhalb zwei Stunden zugetropft. Nach beendeter Zugabe wird eine Stunde weitergerührt und schließlich bei 50 °C mit 66,4 g 45 %iger Natronlauge neutralisiert. Man erhält eine fließfähige viskose Dispersion mit 15,3 % wirksamer Substanz.
Viskosität (Brookfield RVM, Sp. 3, 2,5 Upm): 19 600 mPas pH-Wert (1:10): 8,2

### Beispiel 2:

In einem Dreihals-Glaskolben mit Rührer und Kühler werden 325 g deionisiertes Wasser, 138 g Acrylsäure, 10 g Dodecylbenzolsulfonsäure, 12 g Nonylphenoxy(14 EO)methacrylat, 0,2 g Mercaptoethanol und 1 g einer 0,6 %igen Eisen(II)sulfat-Lösung vorgelegt. Durch gleichzeitige Zugabe einer Lösung von 3,6 g Natriumpersulfat in 10 g Wasser und 1,8 g Natriumbisulfit in 10 g Wasser wird die Polymerisation bei 20 °C gestartet. Diese erreicht innerhalb von fünf Minuten ein Temperaturmaximum von 99 °C. Die Reaktion wird bei 80 °C zwei Stunden fortgeführt. Zur Nachkatalyse werden jeweils nach 30 und nach 90 Minuten 1,8 g bzw. 1 g der Peroxoverbindung in 7 g Wasser zugesetzt. Nach zwei Stunden Gesamtreaktionszeit werden 27,3 g Butyldiglykol zugegeben und die Mischung durch Zugabe von 104,3 g einer 25 %igen Ammoniaklösung neutralisiert. Man erhält eine feinteilige, fließfähige Emulsion mit 30 % Wirksubstanz, die beliebig mit Wasser verdünnbar ist.
Viskosität (Brookfield RVM, Sp.6, 10 Upm): 19 000 mPas pH-Wert (1:10): 6,4

### Beispiel 3:

Man verfährt wie bei Beispiel 2, jedoch wird als Monomeres der Gruppe b) 20 g lsotridecyl(20 EO)methacrylat eingesetzt.
Viskosität (Brookfield RVM, Sp.5, 5 Upm) : 13 000 mPas pH-Wert (1:10): 5,2

### Beispiel 4:

In einen Reaktor mit Flügelrührer und Rüokflußkühler werden 74,2 g eines Reaktionsproduktes von 240 g Allylalkohol (10 EO) und 50 g Bernsteinsäureanhydrid sowie 1025 g deionisiertes Wasser vorgelegt und unter Stickstoff-Spülung auf 80 °C aufgeheizt. Durch verschiedene Zuläufe werden gleichzeitig 303,8 g Acrylsäure, 100 g einer 20 %igen wäßrigen Natriumpersulfat-Lösung und 100 g einer 10 %igen wäßrigen Natriumbisulfit-Lösung innerhalb einer Stunde gleichmäßig zugetropft. Nach einer weiteren Stunde Reaktionszeit bei 80 °C wird mit 382 g 45 %iger Natronlauge neutralisiert. Man erhält eine klare niedrigviskose Lösung mit 25 % Aktiv-substanz.
Viskosität (Brookfield-RVM Sp.1, 10 Upm): 100 mPas pH-Wert (1:10): 7,3

### Beispiel 5:

In einen Reaktor mit Flügelrührer und Rückflußkühler werden 130,2 g Allylalkohol(5 EO) und 1025 g deionisiertes Wasser vorgelegt und unter Stickstoff-Spülung auf 80 °C aufgeheizt. Durch verschiedene Zuläufe werden gleichzeitig 303,8 g Acrylsäure, 100 g einer 20 %igen wäßrigen Natrium-persulfat-Lösung und 100 g einer 10 %igen wäßrigen Natrium-bisulfit-Lösung innerhalb einer Stunde gleichmäßig zugetropft. Nach einer weiteren Stunde Reaktionszeit bei 80 °C wird mit 382 g 45 %iger Natronlauge neutralisiert. Man erhält eine opale niedrigviskose Lösung mit 30 % Aktivsubstanz.
Viskosität (Brookfield RVM, Sp.1, 10 Upm): 190 mPas pH-Wert (1:10): 7,6

### Beispiel 12:

In der in Beispiel 5 beschriebenen Apparatur werden 42,8 c Allylalkohlol (10 EO + 10 PO) und 291,2 g deionisiertes Wasser vorgelegt und unter Stickstoff-Spülung auf 80°C aufgeheizt. Durch verschiedene Zuläufe werden gleichzeitig 100,0g Acrylsäure, 33,0g einer 20%igen wäßrigen Natriumpersulfatlösung und 33,0g einer 10%igen wäßrigen Natriumbisulfitlösung innerhalb einer Stunde gleichmäßig zugetropft. Nach einer weiteren Stunde Reaktionszeit bei 80°C wird mit 111,0g 50%iger Natronlauge neutralisiert. Man erhält eine opale niedrigviskose Lösung mit 31% Aktiv-substanz.
Viskosität (Brookfield RVM, SP.1, 10Upm) : 660 mPas
pH-Wert (1:10): 8,0

### Beispiel 13:

Es wird wie in Beispiel 2 verfahren, jedoch besteht die Monomervorlage aus 124,3g Acrylsäure, 13,8g Acrylamid und 12,0g Nonylphenoxy(14EO)methacrylat.
Viskosität (Brookfield RVM, SP.6, 10Upm): 26.000 mPas pH-Wert (1:10): 6,0

### Beispiel 14:

Es wird wie in Beispiel 2 verfahren, jedoch besteht die Monomervorlage aus 96,6g Acrylsäure, 41,5g Acrylamid und 12,0g Nonylphenoxy(14EO)methacrylat.
Viskosität (Brookfield RVM, SP.6, 10Upm): 15.000 mPas pH-Wert (1:10): 6,2

### Beispiel 15:

Es wird wie in Beispiel 2 verfahren, jedoch besteht die Monomervorlage aus 138,0g Acrylsäure und 27,1g eines Methoxypolyethylenglykolmethacrylates mit ca. 45 addierten Ethylenoxideinheiten.
Viskosität (Brookfield RVM, SP.3, 10Upm): 3.800 mPas pH-Wert (1:10): 6,6

### Beispiel 16:

Es wird wie in Beispiel 2 verfahren, jedoch besteht die Monomervorlage aus 138,0g Acrylsäure und 8,0g eines Isopropoxypolyethylenglykolacrylats mit ca. 11 addierten Ethylenoxideinheiten.
Viskosität (Brookfield RVM, SP.3, 10Upm): 2.050 mPas pH-Wert (1:10): 6,6

### Beispiel 17:

Es wird wie in Beispiel 2 verfahren, jedoch besteht die Monomervorlage aus 138,0g Acrylsäure und 12,0g eines Vinylethers von Methanol mit ca. 7 addierten Ethylenoxideinheiten.
Viskosität (Brookfield RVM, SP.3, 5Upm): 11.500 mPas pH-Wert (1:10): 6,4

### Beispiel 18:

Es wird wie in Beispiel 2 verfahren, jedoch besteht die Monomervorlage aus 125,0g Acrylsäure und 25,0g eines Vinylethers von Methanol mit ca. 12 addierten Ethylenoxieinheiten.
Viskosität (Brookfield RVM, SP.6, 10Upm): 30.000 mPas pH-Wert (1:10) : 6,3

### Beispiel 19:

In der in Beispiel 5 beschriebenen Apparatur werden 130g Butendiol-1,4 mit 30 mol EO und 30 mol PO und 540g deionisiertes Wasser vorgelegt und unter Stickstoffspülung auf 80°C aufgeheizt. Durch verschiedene Zuläufe werden gleichzeitig 303,8g Acrylsäure, 100,0g einer 20%igen wäßrigen Natriumpersulfat-Lösung und 100,0g einer 10%igen wäßrigen Natriumbisulfit-Lösung innerhalb einer Stunde gleichmäßig zugetropft. Nach einer weiteren Stunde Reaktionszeit bei 80°C wird mit 344,0g 50%iger Natronlauge neutralisiert. Man erhält eine opale niedrigviskose Lösung mit 37% Aktivsubstanz.
Viskosität (Brookfield RVM, SP.1, 1Upm): 4000 mPas
pH-Wert (1:10): 7,5

### Beispiele 6 - 11 und 20 - 27 : Ledertechnische Anwendung

Die Behandlung der Leder mit den erfindungsgemäßen Copolymeren bzw. dem Vergleichsmuster Magnopal 5067 (Chem. Fabrik Stockhausen GmbH) erfolgte nach folgendem Verfahrensschema:

Leder: Rindleder, Typ Oberleder, wet blue, Falzstärke 1,8 bis 2,0 mm, Prozent-Angaben beziehen sich auf das Falzgewicht.

| | | |
|---|---|---|
| 1) Waschen | 300 % Wasser | 35 °C, |
| | 0,5 % Ameisensäure 1:5, | |
| | 0,5 % Entfettungsmittel ⁽¹⁾, | 15 Min |
| Flotte ablassen | | |
| 2) Neutralisation | 100 % Wasser | 35 °C |
| | 2 % Natriumformiat, | |
| Nachgerbung | 2 % Nachgerbstcff⁽²⁾ | 45 bis |
| | | 60 Min |
| End-pH Flotte 4,3 bis 5,1, | | |
| Lederquerschnitt gegen Bromkresolgrün: grün-blau | | |
| Flotte ablassen | | |
| 3) Waschen | 300 % Wasser | 60 °C |
| | | 10 Min |
| Flotte ablassen | | |
| 4) Nachgerbung | 100 % Wasser | 60 °C |
| | 4 bis 10 % Polymergerbstoff gemäß Beispielen 1 bis 5 und 12 bis 19, 1:4 | 30 Min |
| 5) Färbung | 1 % Baygenal Braun L-NR⁽³⁾, 1:20 | 2x10Min |
| 6) Fettung | 8 -12 % anionische Fettungsmittelkombination, 1:4 | 30 Min |
| | +1 % Ameisensäure 1:5 | 30 Min |
| End-pH der Flotte 3,5 bis 3,9 | | |
| Flotte ablassen | | |
| 7) Spülen | Wasser 20 °C | 5 Min |
| Leder über Nacht 3 Min), hängend auf Bock, abwalken, vakuumtrocknen (80 °C, austrocknen, anfeuchten, stellen, bügeln | | |

| | | |
|---|---|---|
| (1) Nichtionische Tensidkombination, Hersteller: Chemische Fabrik Stockhausen GmbH, Handelsname Tetralix SMS | | |
| (2) lichtechter, anionischer Nachgerbstoff mit starker Neutralisations- und Pufferwirkung, Hersteller: Bayer AG Handelsname TANIGAN® PC | | |
| (3) Produkt der Bayer AG, Leverkusen | | |

Die Prüfung der erhaltenen Leder erfolgte einerseits durch Messung der Dicke in mm sowie durch Benotung von Weichheit, Narbenfestigkeit und Lederfarbe. In der folgenden Tabelle sind die Testergebnisse der ledertechnischen Anwendung der erfindungsgemäßen Beispielpolymerisate dargestellt. Zum Vergleich wurde ein handelsüblicher Nachgerbstoff auf Acrylsäure/Acrylamid-Basis, Handelsbezeichnung Magnopal 5067 (Chem. Fabrik Stockhausen GmbH) eingesetzt.

| Beispiel | Polymer nach Beisp. | Dicke in mm | Weichheit | Narben festigkeit | Leder farbe |
|---|---|---|---|---|---|
| 6 | 1 | 2,1/2,2 | 1-2 | 1-2 | mittel |
| 7 | 2 | 2,2/2,4 | 4 | 2-3 | hell |
| 9 | 4 | 2,0/2,1 | 1 | 2 | mittel |
| 10 | 5 | 2,0/2,2 | 3-4 | 2 | dunkel |
| 20 | 12 | 1,9/2,0 | 4 | 4 | mittel |
| 21 | 13 | 2,1/2,2 | 3 | 2 | mittel |
| 22 | 14 | 1,8/2,0 | 3 | 3 | hell |
| 23 | 15 | 2,0/2,1 | 2-3 | 3 | dunkel |
| 24 | 16 | 2,0 | 3-4 | 3 | mittel |
| 25 | 17 | 1,8/1,9 | 4 | 2 | hell |
| 26 | 18 | 1,8/1,9 | 2-3 | 2 | mittel |
| 27 | 19 | 1,9/2,0 | 2-3 | 3- | hell |
| 11 | Vergleich | 1,7/1,8 | 3-4 | 2 | sehr dunkel |

Mit sämtlichen erfindungsgemäßen Beispielpolymeren konnte demnach neben Verbesserungen der übrigen Eigenschaften des Leders vor allem eine deutliche Füllesteigerung gegenüber dem Ergebnis bei der Verwendung eines dem Stand der Technik entsprechenden Polymer erzielt werden.

## Patentansprüche

1. Verfahren zum Nachgerben mineralisch oder kombiniert gegerbter Leder, **dadurch gekennzeichnet, dass** man die Leder mit 0,02 bis 10 Gew.-%, vorzugsweise 0,1 bis 7,5 Gew.-%, besonders bevorzugt 0,4 bis 5 Gew.-%, bezogen auf das Falzgewicht des Leders, mit Polymerisatem hergestellt durch Polymerisation von
a) 1-99 Gew.-%, vorzugsweise 30 bis 95 Gew.-%, wasserlöslichen, ethylenisch ungesättigten, säuregruppenenthaltenden Monomeren und/oder ungesättigten Dicarbonsäureanhydriden,
b) 1 bis 50 Gew.-%, vorzugsweise 5 bis 35 Gew.-%, eines ethylenisch ungesättigten, ein- oder mehrfach alkoxylierten Monomeren der allgemeinen Formel (1) 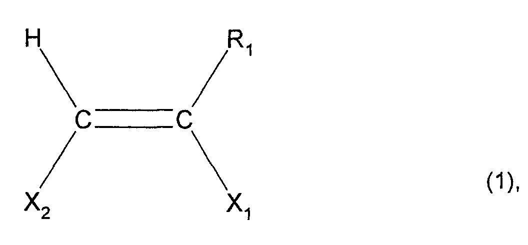 mit
R₁ gleich H oder Methyl,
X₁ gleich COOR₂, CH₂OR₂, CH₂N(R₂)₂, OR₂,
X₂ gleich H, COOH, CONHR₃, CH₂OR₂ und
R₂ gleich [-CHR₄-CHR₅-O-]ₙ-CHR₄-CHR₅-Y-R₆,
R₃ gleich H oder C₁-C₄-Alkyl,
R₄, R₅ gleich H oder Methyl,
n gleich 1 bis 50,
Y gleich O, NR₇, S,
R₆ gleich H, C₁-C₂₄-Alkyl, C₆-C₁₂-Aryl, C₇-C₂₄-Alkylaryl, ungesättigter Monooder Dicarbonsäurerest,
R₇ gleich C₁-C₄-Alkyl, sowie
c) 0 bis 60 Gew.-%, vorzugsweise 0 bis 40 Gew.-% weiteren mit a) und b) copolymerisierbaren wasserlöslichen Monomeren,
mit der Massgabe, dass sich die Gewichtsprozente von a), b) und c) zu 100% ergänzen, ausgenommen Terpolymere aus 41,6 Gew.-% Methacrylsäure, 37 Gew.-% des Esters von Methacrylsäure mit dem Octylphenyloxypoly(ethylenoxy)ethanol mit 40 Ethylenoxideinheiten, und 21,4 gew.-% Methylmethacrylat,
in wässriger Phase bei einer Flottenlänge von 50 bis 1000 Gew.-% , bevorzugt 100 bis 500 Gew.-%, einem pH-Wert der Flotte von 3,5 bis 6 und Temperaturen von 20 bis 60 °C über einen Zeitraum von 5 bis 180, vorzugsweise 20 bis 60 Minuten behandelt.

2. Verfahren nach Anspruch 1, **dadurch gekennzeichnet, dass** als Monomeres der Gruppe a) Acrylsäure eingesetzt wird.

3. Verfahren nach den Ansprüchen 1 und 2, **dadurch gekennzeichnet, dass** Monomere der Gruppe b) eingesetzt werden, die entweder durch Oxaalkylierung eines Hydroxy- oder Aminogruppen enthaltenden Monomeren oder aber durch die Umsetzung der Alkoxyaddukte von gesättigten aliphatischen, cycloaliphatischen oder aromatischen Alkoholen, Aminen oder Thiolen mit ethylenisch ungesättigten Carbonsäuren oder reaktiven Carbonsäurederivaten zu den entsprechenden Estern hergestellt worden sind.

4. Verfahren nach Anspruch 3, **dadurch gekennzeichnet, dass** die Monomeren der Gruppe b) ausgewählt sind aus der Gruppe oxalkylierter Allylalkohol, Vinylalkohol oder oxalkyliertes Butendiol, oder einem Alkoxyaddukt der Methacrylsäure.

5. Verfahren nach Anspruch 4, **dadurch gekennzeichnet, dass** es sich bei dem Monomeren a) um Acrylsäure handelt, und (b) in Formel (1) R₁ für Methyl, X₂ für H und X₁ COOR₂ stehen.

6. Verfahren nach den Ansprüchen 1 bis 5, **dadurch gekennzeichnet, dass** das Polymerisat in teilweise oder vollständig neutralisierter Form als wässrige Lösung oder Emulsion eingesetzt wird.

## Claims

1. A process for retanning leathers that have been tanned by a mineral or combined method, **characterized in that** the leathers are treated with 0.02 to 10%, preferably 0.1 to 7.5%, most preferably 0.4 to 5%-wt., relative to the shaved weight of the leathers, of polymers prepared by polymerization of
a) 1 to 99%-wt., preferably 30 to 95%-wt. of water-soluble, ethylenically unsaturated, acid groups-containing monomers and/or unsaturated dicarboxylic acid anhydrides,
b) 1 to 50%-wt., preferably 5 to 35%-wt. of an ethylenically unsaturated, mono- or multiply alkoxylated monomer of the general formula (1): 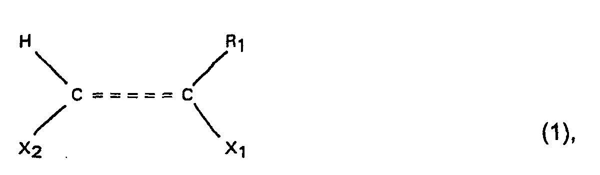
with
R₁ = H or methyl
X₁ = COOR₂, CH₂OR₂, CH₂N(R₂)₂, OR₂
X₂ = H, COOH, CONHR₃, CH₂OR₂
and
R₂ = [-CHR₄-CHR₅-O-]ₙ-CHR₄-CHR₅-Y-R₆
R₃ = H or C₁-C₄ alkyl, R₄,R₅ = H or methyl
n = 1 to 50
Y = O, NR₇, S
R₆ = H, C₁-C₂₄ alkyl, C₆-C₁₂ aryl, C₇-C₂₄ alkylaryl, C₂-C₂₄ saturated monocarboxylic or dicarboxylic acid residue
R₇ = C₁-C₄ alkyl, and
c) 0 - 60%-wt., preferably 0 to 40%-wt. of further water-soluble monomers which are copolymerizable with a) and b),
with the proviso that the weight percentage of a), b) and c) make up 100%, with the exception of terpolymers of 41.6%-wt. of methacrylic acid, 37%-wt. of the ester of methacrylic acid with the octyl phenyloxypoly(ethylene oxy)ethanol with 40 ethylene oxide units, and 21.4%-wt. of methyl methacrylate,
in aqueous phase at a bath length of 50 to 1000%-wt., preferably 100 to 500%-wt., at a pH-value of the bath of 3.5 to 6, and at temperatures of 20 to 60°C within a period of 5 to 180, preferably 20 to 60 minutes.

2. A process according to claim 1 **characterized in that** acrylic acid is used as monomer of group a).

3. A process according to claims 1 and 2 **characterized in that** monomers of group b) are used which have been manufactured either by oxalkylation of a monomer comprising hydroxy or amino groups, or by reaction of the alkoxy adducts of saturated aliphatic, cycloaliphatic, or aromatic alcohols, amines, or thiols with ethylenically unsaturated carboxylic acids or reactive carboxylic acid derivatives to form the corresponding esters, or by addition of the mentioned alkoxy adducts to acetylene to form the corresponding vinyl ethers.

4. A process according to claim 3 **characterized in that** the monomer of group b) is selected from the group of oxaalkylated allyl alcohol, vinyl alcohol or oxaalkylated butene diol, or an alkoxy adduct of methacrylic acid.

5. A process according to claim 5 **characterized in that** the monomer a) is acrylic acid, and b) in formula (1) R₁ is methyl, X₂ is H and X₁ is COOR₂.

6. A process according to claims 1 to 6 **characterized in that** the polymerisate is used in partially or completely neutralized form as aqueous solution or emulsion.

## Revendications

1. Procédé de retannage de cuirs tannés par voie minérale ou combinée, **caractérisé en ce que** l'on traite les cuirs par 0,02 à 10% en poids, de préférence, de 0,1 à 7,5% en poids, de manière particulièrement avantageuse, de 0,4 à 5% en poids, par rapport au poids à l'état dérayé des cuirs, des polymères, préparés par la polymérisation de
a) 1 à 99% en poids, de préférence, 30 à 95% en poids, d'anhydrides d'acides dicarboxyliques insaturés et/ou de monomères contenant des radicaux acide, éthyléniquement insaturés, solubles dans l'eau,
b) 1 à 50% en poids, de préférence, 5 à 35% en poids, d'un monomère éthyléniquement insaturé, mono- ou polyalcoxylé, répondant à la formule générale (1) : 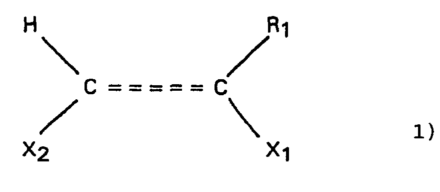
où
R₁ = H ou méthyle
X₁ = COOR₂, CH₂OR₂, CH₂N(R₂)₂, OR₂
X₂ = H, COOH, CONHR₃, CH₂OR₂
et
R₂ = [-CHR₄-CHR₅-O-]ₙ-CHR₄-CHR₅-Y-R₆
R₃ = H ou alkyle en C₁-C₄, R₄, R₅ = H ou méthyle
n = 1 à 50
Y = O, NR₇, S
R₆ = H, alkyle en C₁-C₂₄, aryle en C₆-C₁₂, alkylaryle en C₇-C₂₄, reste d'acide mono- ou dicarboxylique en C₂-C₂₄ saturé,
R₇ = alkyle en C₁-C₄, ainsi que
c) de 0 à 60% en poids, de préférence, 0 à 40% en poids, d'autres monomères solubles dans l'eau, copolymérisables avec a) et b),
avec la condition que les pourcentages pondéraux de a), b) et c) se complètent pour former 100%,
à l'exception de terpolymères constitués de 41,6% en poids d'acide méthacrylique, de 37% en poids de l'ester de l'acide méthacrylique avec 1'octylphényloxypoly(éthylèneoxy)éthanol avec 40 unités oxyde d'éthylène et de 21,4% en poids de méthacrylate de méthyle, en phase aqueuse, à une longueur de bain de 50 à 1000% en poids, de préférence, de 100 à 500% en poids, une valeur de pH du bain de 3,5 à 6 et des températures de 20 à 60°C pendant une période qui varie de 5 à 180 minutes, de préférence, de 20 à 60 minutes.

2. Procédé suivant la revendication 1, **caractérisé en ce que** l'on utilise l'acide acrylique à titre de monomère du groupe a).

3. Procédé suivant les revendications 1 et 2, **caractérisé en ce que** l'on utilise des monomères du groupe b) qui ont été préparés soit par l'oxalkylation d'un monomère contenant des radicaux hydroxyle ou amino, soit par la réaction des alcoxyadduits de thiols, d'amines, ou d'alcools, aromatiques, cycloaliphatiques, aliphatiques, saturés, avec des dérivés d'acides carboxyliques réactifs, ou des acides carboxyliques, éthylénique-ment insaturés, en les esters correspondants.

4. Procédé suivant la revendication 3, **caractérisé en ce que** le monomère du groupe b) est choisi parmi l'alcool allylique oxalkylé, l'alcool vinylique ou le butenediol oxalkylé ou un alcoxy-adduit de l'acide méthacrylique.

5. Procédé suivant la revendication 4, **caractérisé en ce que** le monomère du groupe a) est l'acide acrylique et dans la formule (1) R₁= méthyle, X₂ = H et X₁ = COOR₂.

6. Procédé suivant les revendications 1 à 5, **caractérisé en ce que** le produit de la polymérisation est utilisé en solution aqueuse ou émulsion sous forme partiellement ou totalement neutralisé.
